# EUROPÄISCHE PATENTSCHRIFT

(11) **EP 1 631 639 B1**
(45) Veröffentlichungstag und Bekanntmachung des Hinweises auf die Patenterteilung: **14.10.2009**
(21) Anmeldenummer: 04734679.6
(22) Anmeldetag: 25.05.2004
(51) Int. Cl.: C09J 9/00, C09J 11/04, C09D 5/02, C08K 3/00

(54) **MARKIERTE POLYMERDISPERSION UND DARAUS ERHÄLTLICHE KLEBSTOFFE**
LABELED POLYMER DISPERSION AND ADHESIVES OBTAINED THEREFROM
DISPERSION POLYMERE MARQUEE ET ADHESIFS OBTENUS A PARTIR DE LADITE DISPERSION

(30) Priorität: 27.05.2003 DE 10324086
(43) Veröffentlichungstag der Anmeldung: 08.03.2006
(73) Patentinhaber: Henkel AG & Co. KGaA, 40589 Düsseldorf (DE)
(72) Erfinder: GRÜNEWÄLDER, Bernhard, 40721 Hilden (DE); EMPT, Thomas, 41747 Viersen (DE); NESS, Birgit, 40764 Langenfeld (DE); BECK, Horst, 41470 Neuss (DE)
(86) Internationale Anmeldenummer: PCT/EP2004/005602
(87) Internationale Veröffentlichungsnummer: WO 2004/106451

(56) Entgegenhaltungen:
- EP-A- 0 905 100
- WO-A-01/18081
- WO-A-03/046065
- DE-A- 19 818 115
- FR-A- 2 640 633
- US-A- 5 314 532

## Beschreibung

Die vorliegende Erfindung betrifft eine Polymerdispersion, enthaltend Wasser, mindestens ein durch Emulsionspolymerisation herstellbares Polymeres und mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn.

Der Einsatz von Klebstoffen bei der Fertigung industrieller Güter verdrängt in zunehmendem Maße mechanische Befestigungsmittel. Dies geschieht insbesondere dort, wo die Verbindung zweier Werkstücke nur moderaten mechanischen Belastungen ausgesetzt ist. Der Vorteil des Einsatzes von Klebstoffen zur Herbeiführung mechanischer Verbindungen liegt insbesondere in der einfachen Anwendung der Klebstoffe, der Möglichkeit die Verbindung von Werkstoffen kontinuierlich und gewünschtenfalls vollflächig zu betreiben und der hohen Belastbarkeit moderner Klebstoffe, wie sie beispielsweise in der Möbelindustrie oder in der Fahrzeugindustrie zum Einsatz kommen, begründet.

Häufig kommen in diesem Bereich Dispersionsklebstoffe mit wasserdispergierbaren Polymeren wie sie beispielsweise durch Emulsionspolymerisation von ethylenisch ungesättigten Monomeren in wässriger Phase erhältlich sind zum Einsatz. Mit der zunehmenden Ausbreitung von Klebstoffen bei der Herstellung von hochwertigen Gegenständen tritt jedoch auch die Qualität der Klebstoffe selbst in den Vordergrund. Besonders bei der Herstellung hochwertiger Möbel sind die Hersteller darauf angewiesen, dass die eingesetzten Klebstoffe alle geforderten Normen erfüllen, so dass Möbelstücke keinen Qualitätsmängel aufgrund qualitativ minderwertiger Klebstoffe zeigen. Wenn eine mit einem Klebstoff ausgeführte Verklebung die an sie gestellten qualitativen Ansprüche nicht erfüllt, so gestaltet sich die Suche nach der Ursache dieses Problems häufig sehr schwierig. Besonders der Nachweis, dass tatsächlich ein Klebstoff eingesetzt wurde, welcher die geforderte Norm erfüllt war bislang nur unter großem Aufwand möglich.

Besonders die Hersteller qualitativ hochwertiger Klebstoffe standen oft vor dem Problem, dass durch Nachahmer vertriebene, qualitativ minderwertige Klebstoffe nach der Ausführung einer Verklebung nur noch unter größtem Aufwand identifiziert werden konnten.

Um diesem Problem zu begegnen werden Klebstoffe beispielsweise mit fluoreszierenden Markern versetzt. Dies soll gewährleisten, dass eine Verklebung auch nachträglich noch daraufhin zu überprüfen ist, ob sie mit dem tatsächlich für diese Verklebung vorgesehenen Klebstoff durchgeführt wurde.

Problematisch wirkt sich bei dieser Vorgehensweise aus, dass die Zahl der mit fluoreszierenden Markern versetzten Klebstoffe zwischenzeitlich so groß ist, dass keine eindeutige Identifizierung und Zuordnung der Klebstoffe möglich ist. Darüber hinaus erschwert das relativ unspezifische Merkmal "Fluoreszenz" die Verfolgung von Produktpiraten, da die Identifizierung der tatsächlichen Quelle der Fluoreszenz und damit der als Marker eingesetzten Verbindung außerordentlich aufwendig ist.

Anbieter von Klebstoffen haben in der Regel ein breites Produktportfolio, das mehrere Klebstofftypen mit unterschiedlichsten Eigenschaftsprofilen umfasst. Insbesondere in jüngerer Zeit haben Klebstoffhersteller damit begonnen, Klebstofftypen anzubieten, deren Eigenschaftsprofil auf einen bestimmten Einsatzzweck hin optimiert ist. Während der Klebstofftyp im Rahmen dieses Einsatzzwecks hervorragende Eigenschaften aufweist, kann der gleiche Klebstofftyp im Rahmen eines anderen Einsatzzwecks, beispielsweise auf einem ungeeigneten Untergrund oder bei ungeeigneten Umgebungsbedingungen hinsichtlich seiner Klebkraft derart ungeeignet sein, dass eine entsprechende Verklebung die für den tatsächlichen Einsatz ausgelobten Eigenschaften nicht mehr aufweist. Bereits der nicht autorisierte Austausch von Klebstofftypen innerhalb des Produktportfolios eines Klebstoffherstellers kann daher zu Problemen führen, zu deren Aufklärung und Behebung eine Kenntnis des eingesetzten Klebstofftyps unerlässlich ist.

Bei den aus dem Stand der Technik bekannten organischen Markern wirkt sich darüber hinaus nachteilig aus, dass diese Marker sich unter Einfluss von Umgebungsbedingungen wie Licht, Sauerstoff, Temperatur und dergleichen oder durch Reaktion mit einem oder mehreren Inhaltsstoffen des Klebstoffs zersetzen können und sich damit gegebenenfalls einem Nachweis entziehen.

Die nicht vorveröffentlichte deutsche Patentanmeldung mit dem Aktenzeichen 101 58 839.9 betrifft ein Verfahren zur Markierung eines Dispersionsklebstoffs mit einem Element ausgewählt aus der Gruppe bestehend aus Li, B, Co, Cu, Mo, Ni, Pb, oder Sn, und damit markierte Dispersionsklebstoffe. Mit Hilfe des Verfahrens lässt sich die oben beschriebene Markierung problemlos durchrühren. Problematisch wirkt sich dabei jedoch aus, dass durch die begrenzte Zahl der insgesamt für eine derartige Markierung zur Verfügung stehenden Elemente eine Unterscheidung der Vielzahl an Klebstoffen innerhalb des Produktportfolios eines Anbieters von Klebstoffen nicht möglich ist. Darüber hinaus kann die in der oben genannten Anmeldung beschriebene Markierungsmethode beispielsweise bei einer Anwendung auf metallhaltigen Untergründen an ihre Grenzen stoßen, wenn beispielsweise das zur Markierung eingesetzte Element im der entsprechenden Untergrund enthalten ist.

Die DE 195 48 038 A1 und die DE 199 00 459 A1 betreffen Polymerdispersionen, die unter Verwendung von metallhaltigen Katalysatoren hergestellt werden können.

Es bestand daher die Aufgabe eine Polymerdispersion zur Verfügung zu stellen, die eine eindeutige Zuordnung zum jeweiligen Hersteller erlaubt. Weiterhin war es Aufgabe der vorliegenden Erfindung, eine Polymerdispersion zur Verfügung zu stellen, die eine Zuordnung zum jeweiligen Hersteller auf möglichst einfache Weise erlaubt. Weiterhin war es Aufgabe der vorliegenden Erfindung, eine Polymerdispersion zur Verfügung zu stellen, die eine Zuordnung auch innerhalb eines breiten Produktportfolios eines Herstellers ermöglicht. Weiterhin war es Aufgabe der vorliegenden Erfindung, eine Polymerdispersion zur Verfügung zu stellen, die eine Identifizierung des Klebstoffs auch noch nach weitgehendem Abbau der Klebstoffmatrix zulässt.

Gelöst wird die Aufgabe durch eine Polymerdispersion, die Wasser, mindestens ein wasserdispergierbares Polymeres und mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn enthält.

Gegenstand der Erfindung ist daher eine Polymerdispersion, enthaltend Wasser, mindestens ein wasserdispergierbares Polymeres und mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten und die Gesamtmenge an Ionen ausgewählt aus der oben genannten Gruppe mindestens 10 ppm beträgt.

Die Angabe "ppm" bezieht sich im Rahmen des vorliegenden Textes, sofern nicht ausdrücklich etwas anderes angemerkt wird, auf das Gewicht der entsprechenden Verbindungen, Elemente, Ionen und Zusammensetzungen.

Unter einer " Polymerdispersion " wird im Rahmen der vorliegenden Erfindung eine Dispersion partikelförmiger Polymerteilchen in wässriger Phase verstanden. Die Größe der Polymerteilchen bewegt sich dabei in einem Rahmen, wie er üblicherweise bei der Durchführung von Polymerisationen mittels Emulsionspolymerisation eingehalten wird. Beispielhafte Größen liegen im Rahmen der vorliegenden Erfindung in einem Bereich von etwa 0,001 bis etwa 0,2 mm.

Der Begriff "wasserdispergierbar" umfasst dabei im Rahmen der vorliegenden Erfindung beispielweise alle Polymere die in Wasser selbstdispergierbar sind, d.h., ohne Zusatz von Emulgatoren oder unter Zusatz von nur geringen Emulatormengen, beispielsweise bis zu etwa 1 oder bis zu etwa 0,5 Gew.-% oder bis zu etwa 0,2 Gew.-% oder weniger in Wasser oder wässriger Umgebung eine stabile Dispersion bilden. Geeignet sind hierbei beispielsweise Polymere, die eine ausreichende Zahl an hydrophilen Gruppen, beispielsweise quaternären Aminogruppen, Carboxylgruppen oder Polyethergruppen, aufweisen. Ebenfalls von Begriff "wasserdispergierbar", wie er im Rahmen des vorliegenden Textes benutzt wird umfasst, sind Polymere, die nicht selbst in Wasser dispergierbar sind, jedoch unter Zusatz von Emulgatoren in Wasser stabile Dispersionen bilden. Hierzu zählen beispielsweise diejenigen Polymere, die durch Emulsionspolymerisation herstellbar sind.

Die erfindungsgemäßen Polymerdispersionen können Wasser enthalten, das aus einer beliebigen Quelle stammt. Beispielsweise handelt es sich beim in den erfindungsgemäßen Polymerdispersionen eingesetzten Wasser um Leitungswasser, wie es in der Regel aus entsprechenden Versorgungsquellen erhältlich ist. Es ist jedoch ebensogut möglich in den erfindungsgemäßen Polymerdispersionen Grundwasser, Brauchwasser, Prozesswasser oder in sonstiger Form aus einem Kreislauf wiedergewonnenes Wasser einzusetzen, sofern der pH-Wert und der Salzgehalt die Aufrechterhaltung stabiler Polymerdispersionen erlauben.

Zur Herstellung der erfindungsgemäßen Polymerdispersionen eignen sich beispielsweise olefinisch ungesättigte Monomere die einer Emulsionspolymerisation zugänglich sind. Geeignete Polymere zur Herstellung der erfindungsgemäßen Dispersionen sind beispielsweise Vinylester-Polymere, deren monomerer Grundbaustein ein Vinylester einer linearen oder verzweigten Carbonsäure mit etwa 2 bis etwa 44, beispielsweise etwa 3 bis etwa 15 C-Atomen darstellt. Als Monomere für diese homo- oder polymeren Polyvinylester kommen Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis etwa 15 C-Atomen im Säurerest, Vinylester von längerkettigen gesättigten oder ungesättigten Fettsäuren wie Vinyllaurat, Vinylstearat oder Vinylester der Benzoesäure und substituierter Derivate der Benzoesäure wie Vinyl-p-tert-butylbenzoat in Frage. Die genannten Vinylester können jeweils einzeln oder als Gemische aus zwei oder mehr der genannten Vinylester im Polyvinylester vorliegen. Der Anteil solcher Vinylester im gesamten Polymeren beträgt im Rahmen einer bevorzugten Ausführungsform der Erfindung mindestens etwa 50 Gew.-%, beispielsweise mindestens etwa 75 Gew.-%.

Im Rahmen einer weiteren bevorzugten Ausführungsform der vorliegenden Erfindung können in der Polymerdispersion auch Polymeren vorliegen, die neben einem der obengenannten Vinylester oder einem Gemisch aus zwei oder mehr der obengenannten Vinylester noch weitere Comonomere aufweisen. Weitere ethylenisch ungesättigte Monomere, die mit den obengenannten Vinylestern copolymerisiert sein können sind beispielsweise Acrylsäure, Methacrylsäure sowie deren Ester mit primären und sekundären gesättigten einwertigen Alkoholen mit 1 bis etwa 28 C-Atomen wie Methanol, Ethanol, Propanol, Butanol, 2-Ethylhexylalkohol, cycloaliphatischen Alkoholen wie Cyclohexanol, Hydroxymethylcyclohexan oder Hydroxyethylcyclohexan. Ebenfalls geeignet sind die Ester der obengenannten, ethylenisch ungesättigten Säuren mit längerkettigen Fettalkoholen. Ebenfalls als Comonomere geeignet sind ethylenisch ungesättigte Dicarbonsäuren wie Maleinsäure, Fumarsäure, Itaconsäure oder Citraconsäure sowie deren Mono- oder Diester mit gesättigten einwertigen aliphatischen Alkoholen mit 1 bis etwa 28 C-Atomen. Der Anteil solcher Comonomeren an den in der erfindungsgemäßen Polymerdispersion vorliegenden Polymeren kann bis zu etwa 25 Gew.-% betragen, beispielsweise etwa 0,1 bis etwa 15 Gew.-%.

Ebenfalls als Comonomere geeignet sind einfache ethylenisch ungesättigte Kohlenwasserstoffe wie Ethylen oder α-Olefine mit etwa 3 bis etwa 28 C-Atomen, beispielsweise Propylen, Butylen, Styrol, Vinyltoluol, Vinylxylol sowie halogenierte ungesättigte aliphatische Kohlenwasserstoffe wie Vinylchlorid, Vinylfluorid, Vinylidenchlorid, Vinylidenfluorid und dergleichen. Derartige Comonomere können einen Anteil am im Rahmen der erfindungsgemäßen Dispersionen eingesetzten Polymeren von bis zu etwa 50 Gew.-% oder darunter, beispielsweise etwa 0,5 bis etwa 25 Gew.-% aufweisen.

Ebenfalls im Rahmen der vorliegenden Erfindung als Comonomere einsetzbar sind beispielsweise mehrfach ethylenisch ungesättigte Monomere. Beispiele für solche Monomeren sind Diallylphthalate, Diallylmaleinat, Triallylcyanurat, Tetraallyloxyethan, Divinylbenzol, Butandiol-1,4-dimethacrylat, Triethylenglykoldimethacrylat, Divinyladipat, Allylacrylat, Allylmethacrylat, Vinylcrotonat, Methylenbisacrylamid, Hexandiodiacrylat, Pentaerythroldiacrylat oder Trimethylolpropantriacrylat oder Gemische aus zwei oder mehr davon. Der Anteil solcher Comonomeren an den in den erfindungsgemäßen Dispersionen vorliegenden, durch Emulsionspolymerisation hergestellten Polymeren beträgt bis zu etwa 10 Gew.-%, beispielsweise etwa 0,01 bis etwa 5 Gew.-%.

Weiterhin als Comonomere geeignet sind ethylenisch ungesättigte Verbindungen mit N-funktionellen Gruppen. Hierzu zählen beispielsweise Acrylamid, Methacrylamid, Allylcarbamat, Acrylnitril, N-Methylolacrylamid, N-Methylolmethacrylamid, N-Methylolallylcarbamat sowie die N-Methylolester, -alkylether oder Mannichbasen des N-Methylolacrylamids oder N-Methylolmethacrylamids oder N-Methylolallylcarbamats, Acrylamidoglykolsäure, Acrylamidomethoxyssigsäuremethylester, N-(2,2-Dimethoxy-1-hydroxyethyl)acrylamid, N-Dimethylaminopropylacrylamid, N-Dimethylaminopropylmethacrylamid, N-Methylacrylamid, N-Methylmethacrylamid, N-Butylacrylamid, N-Butylmethacrylamid, N-Cyclohexylacrylamid, N-Cyclohexylmethacrylamid, N-Dodecylacrylamid, N-Dodecylmethacrylamid, Ethylimidazolidonmethacrylat, N-Vinylformamid, N-Vinylpyrrolidon und dergleichen.

Weitere im Rahmen der vorliegenden Erfindung zur Herstellung der erfindungsgemäßen Polymerdispersionen geeignete organische Polymere entstammen der Gruppe der StyrolButadien-Kautschuke (SBR). Solche Kautschuke werden durch Copolymerisation von Styrol und Butadien hergestellt und enthalten die beiden Monomere in der Regel in einem Gewichtsverhältnis von etwa 23,5 zu 76,5 oder etwa 40 zu 60. Die SBR werden üblicherweise durch Emulsionspolymerisation in Wasser hergestellt.

Eine weitere geeignete Gruppe von Polymeren sind die Polyvinylacetate (PVAC). Die Polyvinylacetate stellen thermoplastische Polymere des Vinylacetats dar. Die Polymerisation erfolgt in der Regel durch Suspensions- oder Emulsionspolymerisation.

Eine weitere geeignete Gruppe von Polymeren stellen die Polyethylenhomo- und Copolymere dar. Eine radikalische Polymerisation von Ethylen wird beispielsweise im Rahmen der Hochdruckpolymerisation zu LDPE bei Drücken von etwa 1.400 bis 3.500 bar unter Temperaturen von 150 bis 350 °C durchgeführt. Die Reaktion wird dabei durch Sauerstoff oder Peroxide gestartet. Als Comonomere eignen sich lineare oder verzweigte α,β-ungesättigte Olefine.

Eine weitere Gruppe von geeigneten Polymeren stellen die Polyacrylsäureester oder die Methacrylsäureester oder Copolymere aus Polyacrylsäureestern und Polymethacrylsäureestern dar. Gegebenenfalls können die genannten Polymere noch geringe Anteile (bis zu etwa 10 %) freie Acrylsäure- oder Methacrylsäuregruppen aufweisen.

Ein weiteres geeignetes Polymeres ist das Polyvinylidenchlorid. Das Polymere wird vorzugsweise durch Emulsionspolymerisation von 1,1-Dichlorethylen erhalten. Besonders geeignet sind Copolymere von 1,1-Dichlorethylen mit Acrylaten, Methacrylaten, Vinylchlorid oder Acrylnitril.

Ein weiteres geeignetes Polymeres ist das Polyvinylidenfluorid. Das Polymere lässt sich durch Polymerisation von Vinylidenfluorid erhalten und kann beispielsweise durch Copolymerisation mit geeigneten Monomeren wie Ethylen, Acrylnitril, Acrylatestern, Methacrylatestern und dergleichen in bezug auf chemische und mechanische Eigenschaften angepasst werden.

Ebenfalls geeignet sind die Polyvinylchloride, wie sie durch Emulsionspolymerisation (E-PVC) erhältlich sind.

Die genannten Polymeren können im Rahmen der vorliegenden Erfindung in der erfindungsgemäßen Polymerdispersion sowohl einzeln als auch im Gemisch aus zwei oder mehr davon, vorliegen.

In einer bevorzugten Ausführungsform der Erfindung wird als organisches Polymeres ein Copolymeres von Vinylacetat und Ethylen (EVA-Copolymeres) eingesetzt. In einer weiteren bevorzugten Ausführungsform der Erfindung enthält die Polymerdispersion Polyvinylacetat oder Polyacrylat, insbesondere Polybutylacrylat oder ein Gemisch aus Polyvinylacetat und Polyacrylat.

Die erfindungsgemäße Polymerdispersion enthält die genannten, durch Emulsionspolymerisation herstellbaren Polymeren in einer Menge von mindestens etwa 30 Gew.-%. Im Rahmen einer bevorzugten Ausführungsform der vorliegenden Erfindung beträgt der Anteil an solchen Polymeren mindestens etwa 35 oder mindestens etwa 40 Gew.-%. Der Gehalt an solchen Polymeren kann jedoch auch darüber liegen, beispielsweise bei mindestens etwa 45 Gew.-% oder mindestens etwa 50 Gew.-% oder darüber, beispielsweise bei mindestens etwa 55 oder mindestens etwa 60 Gew.-%.

Eine erfindungsgemäße Polymerdispersion enthält darüber hinaus noch mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn.

Der Begriff "Elemente" bezieht sich dabei im Rahmen des vodiegenden Textes auf die oben genannten Elemente in ihrer elementaren Form, d.h., auf die entsprechenden Metalle. Derartige Metalle können in den erfindungsgemäßen Polymerdispersionen im wesentlichen in beliebiger Form enthalten sein, sofern eine im Rahmen einer Probennahme im ausreichend gleichmäßige Verteilung der Metalle in der Dispersion bzw. im resultierenden Klebstoff gewährleistet ist.

Vorteilhafterweise werden entsprechende Metalle in möglichst fein verteilter Form eingesetzt, d.h., als Partikel mit möglichst geringer Teilchengröße, beispielsweise als Mikropartikel oder als Nanopartikel.

Als besonders vorteilhaft hat es sich jedoch herausgestellt, wenn die entsprechenden Elemente in Form ihrer wasserlöslichen Salze eingesetzt. Werden nur teilweise wasserlösliche Salze eingesetzt, so sollten diese Salze entsprechend dem oben gesagten beispielsweise als Mikropartikel, Nanopartikel oder entsprechende Mikro oder Nanokolloide eingesetzt werden. Eine besonders gute Verteilung der Salze ist jedoch dann gewährleistet, wenn die eingesetzten Salze wasserlöslich sind. Der Begriff "wasserlöslich" bezieht sich dabei auf die Löslichkeit der Salze in Wasser oder einer wäßrigen Polymerdispersion.

Im Rahmen der Erfindung enthält eine erfindungsgemäße Polymerdispersion daher mindestens zwei wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlösliche Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten.

Der Begriff "unterschiedliches Ion" bezieht sich dabei im Rahmen des vorliegenden Textes nicht auf Ionen eines Elements, das beispielsweise in unterschiedlichen Ionisierungszuständen vorliegen kann. Der Begriff "unterschiedliche Ionen" betrifft vielmehr Ionen unterschiedlicher Elemente ausgewählt aus der oben genannten Gruppe. Der Begriff umfasst dabei sowohl Anionen als auch Kationen, sofern die oben genannten Elemente jeweils als anionische Komplexe wie dies beispielsweise bei Mo der Fall ist, vorliegen können.

Eine erfindungsgemäße Polymerdispersion kann daher beispielsweise die folgenden Kombinationen an Ionen enthalten: Li und Ba, Li und Sr, Li und B, Li und Co, Li und Cu, Li und Mn, Li und Mo, Li und Ni, Li und Ag, Li und Pb, Li und Zn, Li und W, Li und La, Li und Ce, Li und Zn, Ba und Sr, Ba und B, Ba und Co, Ba und Cu, Ba und Mn, Ba und Mo, Ba und Ni, Ba und Ag, Ba und Pb, Ba und Zn, Ba und W, Ba und La, Ba und Ce, Ba und Zn, Sr und B, Sr und Co, Sr und Cu, Sr und Mn, Sr und Mo, Sr und Ni, Sr und Ag, Sr und Pb, Sr und Zn, Sr und W, Sr und La, Sr und Ce, Sr und Zn, B und Co, B und Cu, B und Mn, B und Mo, B und Ni, B und Ag, B und Pb, B und Zn, B und W, B und La, B und Ce, B und Zn, Co und Cu, Co und Mn, Co und Mo, Co und Ni, Co und Ag, Co und Pb, Co und Zn, Co und W, Co und La, Co und Ce, Co und Zn, Cu und Mn, Cu und Mo, Cu und Ni, Cu und Ag, Cu und Pb, Cu und Zn, Cu und W, Cu und La, Cu und Ce, Cu und Zn, Mn und Mo, Mn und Ni, Mn und Ag, Mn und Pb, Mn und Zn, Mn und W, Mn und La, Mn und Ce, Mn und Zn, Mo und Ni, Mo und Ag, Mo und Pb, Mo und Zn, Mo und W, Mo und La, Mo und Ce, Mo und Zn, Ni und Ag, Ni und Pb, Ni und Zn, Ni und W, Ni und La, Ni und Ce, Ni und Zn, Ag und Pb, Ag und Zn, Ag und W, Ag und La, Ag und Ce, Ag und Zn, Pb und W, Pb und La, Pb und Ce, Pb und Zn, W und La, W und Ce, W und Zn, La und Ce, La und Zn sowie Ce und Zn.

Es ist im Rahmen der vorliegenden Erfindung selbstverständlich ebenso möglich, eine erfindungsgemäße Polymerdispersion mit Kombinationen aus drei oder mehr, beispielsweise 4, 5, 6, 7, 8 oder 9 unterschiedlichen Ionen oder Gemischen von Ionen wie sie im Rahmen des vorliegenden Textes als Bestandteil der erfindungsgemäßen Polymerdispersionen aufgezählt wurden, auszustatten.

Es ist erfindungsgemäß bevorzugt, eine erfindungsgemäße Polymerdispersion mit zwei, drei oder vier, insbesondere mit zwei oder drei unterschiedlichen Ionen oder Gemischen von Ionen wie sie oben aufgezählt wurden, auszustatten.

Im Rahmen einer bevorzugten Ausführungsform der vorliegenden Erfindung enthält eine erfindungsgemäße Polymerdispersion mindestens Li-Ionen, Sr-Ionen, Sn-Ionen. oder Mo-Ionen, insbesondere Li-Ionen oder Sn-Ionen.

Es hat sich im Rahmen der vorliegenden Erfindung weiterhin als vorteilhaft ausgestellt, wenn die in einer erfindungsgemäß vorliegenden Dispersionen vorliegenden unterschiedlichen Ionen in einem definierten Verhältnis vorliegen. Grundsätzlich ist das dabei unerheblich, wie das Verhältnis tatsächlich beschaffen ist, solange es für einen bestimmten Klebstofflyp innerhalb eines definierten Bereichs liegt um so die Identifizierung dieses Klebstofftyps zu ermöglichen. Die Menge eines Ions in einer erfindungsgemäßen Polymerdispersion sollte jedoch mindestens so gewählt werden, dass das Ion mit Hilfe üblicher Nachweismethoden, beispielsweise mittels AAS oder ICP, beispielsweise ICP-OES oder ICP-MS, nachgewiesen werden kann.

Wenn eine erfindungsgemäße Polymerdispersion beispielsweise 2 der obengenannten Ionen enthält, so kann das Verhältnis der beiden Ionen zueinander beispielsweise etwa 100:1 bis etwa 1:100 betragen. Im Rahmen einer bevorzugten Ausführungsform der vorliegenden Erfindung wird das Verhältnis von zwei unterschiedlichen Ionen so gewählt, dass das in einem Bereich von etwa 50:1 bis etwa 1:50, beispielsweise etwa 40:1 bis etwa 1:40 oder etwa 30:1 bis etwa 1:30 oder etwa 20:1 bis etwa 1:20 oder etwa 10:1 bis etwa 1:10 oder etwa 5:1 bis etwa 1:5, beispielsweise etwa 4:1 bis etwa 1:4 oder etwa 3:1 bis etwa 1:3 oder etwa 2:1 bis etwa 1:2 oder etwa 1:1.

In verschiedenen Fällen hat es sich bewährt, eines der Elemente beispielsweise als "Leitelement" einzusetzen und ein weiteres Element oder zwei oder mehr weitere Elemente in untergeordneten Mengen einzusetzen. Daraus können beispielsweise Verhältnisse von Ionen resultieren, die innerhalb eines Bereich von etwa 50:1 bis etwa 1:1, beispielsweise etwa 40:1 bis etwa 1:1 oder etwa 30:1 bis etwa 1:1 oder etwa 20:1 bis etwa 1:1 oder etwa 10:1 bis etwa 1:1 oder etwa 5:1 bis etwa 1:1, beispielsweise etwa 4:1 bis etwa 1:1 oder etwa 3:1 bis etwa 1:1 oder etwa 2:1 bis etwa 1:1 1 liegen.

Wenn zur Markierung einer erfindungsgemäßen Polymerdispersion drei oder mehr Ionen eingesetzt werden, so können die einzelnen Ionen unter den oben genannten Voraussetzungen hinsichtlich ihrer Nachweisbarkeit ebenfalls in im wesentlichen beliebigen Verhältnissen eingesetzt werden.

Die vorliegende Erfindung schafft daher die Möglichkeit eines Markierungssystems, das einerseits über die ausgewählten Ionen selbst, über die Zahl der Ionen sowie über die Verhältnisse der einzelnen Ionen untereinander eine nahezu unbegrenzte Zahl an Markierungsmöglichkeiten für Polymerdispersionen schafft.

Die Gesamtmenge an Elementen ausgewählt aus der oben genannten Gruppe beträgt im Rahmen er vorliegenden Erfindung mindestens etwa 10 ppm.

Es hat sich dabei als besonders vorteilhaft herausgestellt, wenn die Gesamtmenge an obengenannten Elementen innerhalb eines Bereichs von etwa 15 bis etwa 800 ppm, beispielsweise innerhalb eines Bereichs von etwa 20 bis etwa 400 ppm liegt. Geeignete Untergrenzen für den Gehalt an den oben genannten Elementen bzw. Ionen sind beispielsweise etwa 25, 30, 35, 40, 45, 50, 55, 60, 65, 70, 75, 80, 85, 90, 95, 100, 105, 110, 115, 120, 125, 130, 135, 14, 145, 150, 155, 160, 165, 170, 175,180, 185, 190, 195 oder 200 ppm. Geeignete Obergrenzen sind entsprechend etwa 390, 380, 370, 360, 350, 345, 340, 335, 330, 325, 320, 315, 310, 305, 300, 295, 290, 285, 280, 275, 270, 265, 260, 255, 250, 245, 240, 235, 230, 225, 220, 215, 210 oder 205 ppm, wobei die genannten Unter- und Obergrenzen im wesentlichen beliebig kombinierbar sind.

Es ist in vorliegenden Fall von Bedeutung, das die zur Markierung eingesetzten Verbindungen nicht in einer die Markierungsmenge wesentlich übersteigenden Menge natürlicher Bestandteil des zu verleimenden Substrats (beispielsweise Holz) oder üblicherweise zur Verleimung eingesetzter Klebstoffe sind. Um dies beispielhaft für den Möbelbau festzustellen, wurden Proben üblicherweise im Möbelbau eingesetzter Hölzer unterschiedlicher Herkunft auf ihren Gehalt an verschiedenen Elementen hin untersucht.

| Untersuchtes Element [mg/kg] | Kiefer | Eiche | Meranti | Teak |
|---|---|---|---|---|
| Li | <1 | <1 | <1 | <1 |
| B | 1 | 3 | 2 | 3 |
| Ba | 5 | 12 | 21 | 2 |
| Ca | 550 | 670 | 2300 | 1200 |
| Cd | <1 | <1 | <1 | <1 |
| Co | <1 | <1 | <1 | <1 |
| Cr | <1 | <1 | <1 | <1 |
| Cu | <1 | 1 | 1 | 3 |
| Fe | 4 | 4 | 5 | 2 |
| Mg | 130 | 79 | 160 | 870 |
| Mo | <1 | <1 | <1 | <1 |
| Ni | <1 | <1 | <1 | <1 |
| P | 6 | 7 | 10 | 790 |
| Pb | <1 | <1 | 1 | <1 |
| Sn | <1 | <1 | 1 | <1 |
| V | <1 | <1 | <1 | <1 |
| Zn | 7 | <1 | 4 | <1 |

Dies zeigt, dass die gemäß der vorliegenden Erfindung zur Markierung eingesetzten Elemente üblicherweise nicht oder nur in geringen Mengen in natürlicher Umgebung, d. h., im vorliegenden Fall im zu verleimenden Holz, vorkommen.

Die vorliegende Erfindung erlaubt daher die Markierung eines Klebstoffs im Hinblick auf seinen Einsatzzweck, beispielsweise bezogen auf die Oberfläche des zu verklebenden Substrats, eindeutig zu markieren. Selbst wenn ein unbekanntes Substrat ein zur Markierung eingesetztes Element in einer unerwartet großen Menge enthält, so verbleibt immer noch ein zweites zur Markierung eingesetztes Element um eine schnelle und zumindest vorläufige Identifizierung zu ermöglichen. Eine nähere Identifizierung ist dann beispielsweise über Bestimmung des Gehalts des Substrats an diesem Element und Subtraktion dieses Werts vom im Klebstoff gemessenen Wert möglich.

Im Rahmen der vorliegenden Erfindung liegen die obengenannten Elemente in Form ihrer anorganischen oder organischen Salze, also in ionisierter Form, in der erfindungsgemäßen Polymerdispersion vor. Als Anionen für die entsprechenden Salze sind grundsätzlich alle Anionen geeignet, welche die Eigenschaften der Polymerdispersion nicht negativ beeinflussen. Vorzugsweise werden Verbindungen eingesetzt, die nicht-toxische Anionen aufweisen.
Im Rahmen einer bevorzugten Ausführungsform der vorliegenden Erfindung werden als Salze insbesondere Chloride oder Nitrate der oben genannten Elemente eingesetzt. Der Rahmen einer weiteren bevorzugten Ausführungsform der vorliegenden Erfindung wird zur Markierung einer erfindungsgemäßen Polymerdispersion Lithiumchlorid eingesetzt.

Zum Nachweis der genannten Elemente eignen sich grundsätzlich alle analytischen Methoden, die einen Nachweis dieser Elemente bis zu einer Untergrenze von etwa 1 ppm oder weniger erlauben. Besonders geeignet sind dabei die dem Fachmann als AAS (Atomabsorptionsspektroskopie) und ICP (Inductive Coupled Plasma) bekannten Methoden.

Die erfindungsgemäße Polymerdispersion kann neben den bislang genannten wasserdispergierbaren organischen Polymeren noch mindestens ein Schutzkolloid oder ein Gemisch aus zwei oder mehr Schutzkolloiden enthalten. Als Schutzkolloide eignen sich beispielsweise veretherte Cellulosederivate wie Hydroxyethylcellulose, Hydroxypropylcellulose oder Carboxymethylcellulose. Ebenfalls geeignet sind Polyvinylpyrrolidon oder Polycarbonsäuren wie Polyacrylsäure oder Polymethacrylsäure, gegebenenfalls in Form ihrer Copolymerisate mit gegebenenfalls OH-Gruppen tragenden Estern der Acrylsäure oder Methacrylsäure, sowie Copolymere der Maleinsäure oder des Maleinsäureanhydrids mit weiteren ethylenisch ungesättigten Verbindungen wie Methylvinylether oder Styrol. Im Rahmen einer bevorzugten Ausführungsform der vorliegenden Erfindung wird als Schutzkolloide jedoch Polyvinylalkohol, beispielsweise Polyvinylalkohol mit einem Hydrolysegrad von etwa 30 bis etwa 100 Gew.-%, beispielsweise etwa 60 bis etwa 98 Gew.-% oder etwa 70 bis etwa 88 Gew.-%, oder ein Gemisch aus zwei oder mehr solcher Polyvinylalkohole eingesetzt. Die im Rahmen der vorliegenden Erfindung in den erfindungsgemäßen Polymerdispersionen einsetzbaren Schutzkolloide können, wie oben beschrieben, einzelnen eingesetzt werden. Es ist jedoch im Rahmen der vorliegenden Erfindung genauso gut möglich, ein Gemisch aus zwei oder mehr der genannten Schutzkolloide einzusetzen.

Im Rahmen einer bevorzugten Ausführungsform der vorliegenden Erfindung enthält eine erfindungsgemäße Polymerdispersion ein OH-Gruppen tragendes Schutzkolloid. In einer weiteren bevorzugten Ausführungsform der vorliegenden Erfindung enthält die Polymerdispersion Polyvinylalkohol als Schutzkolloid.

Der gesamte Anteil des Schutzkolloids oder der Schutzkolloide an der gesamten erfindungsgemäßen Polymerdispersion beträgt etwa 0 bis etwa 20, beispielsweise etwa 0,5 bis etwa 15 oder etwa 1 bis etwa 10 Gew.-%.

Die erfindungsgemäße Polymerdispersion kann darüber hinaus zur Verbesserung der Wasserfestigkeit ein wasserlösliches, saures Metallsalz enthalten. Geeignete Salze sind beispielsweise die Nitrate, Chloride, Oxychloride oder Sulfate von Aluminium, Eisen, Chrom, Titan, Zirkonium oder Vanadium. Im Rahmen einer bevorzugten Ausführungsform der vorliegenden Erfindung werden insbesondere die Salze des Aluminiums, des Chroms oder des Zirkoniums, beispielsweise Aluminiumchlorid, Aluminiumnitrat, Chromchlorid oder Zirkonoxychlorid eingesetzt. Die genannten sauren Metallsalze können im Rahmen der vorliegenden Erfindung jeweils alleine oder als Gemisch aus zwei oder mehr davon eingesetzt werden.

Die entsprechenden Salze werden in einer Menge von etwa 0,05 bis etwa 20 Gew.-%, bezogen auf die gesamte Polymerdispersion, beispielsweise etwa 0,1 bis etwa 10 Gew.-% oder etwa 0,2 bis etwa 5 Gew.-%, eingesetzt. Vorteilhafterweise wird eine Lösung der entsprechenden Metallsalze in die Polymerdispersion eingerührt.

Im Rahmen einer bevorzugten Ausführungsform der Erfindung wird das entsprechenden Metallsalze oder ein Gemisch aus zwei oder mehr der entsprechenden Metallsalze in einer Menge zugegeben, dass der pH-Wert der Polymerdispersion etwa 1 bis etwa 5 beträgt. Im Rahmen einer weiteren bevorzugten Ausführungsform der Erfindung beträgt der pH-Wert der Polymerdispersion etwa 2 bis etwa 4.

Wenn der pH-Wert der Polymerdispersion auch über längere Zeit stabil bleiben soll, so hat es sich als vorteilhaft erwiesen, wenn der Polymerdispersion ein Puffersystem zugegeben wird. Geeignete Puffersysteme für die Dispersion sind beispielsweise:
- Carbonat/Hydrogencarbonat
- Natriumacetat/Essigsäure,
- Monokaliumcitrat (KH₂-citrat),
- Mononatriumphosphat/Zitronensäure.

Neben den bereits genannten Bestandteilen enthält kann erfindungsgemäße Polymerdispersion noch ein Vernetzerharz oder ein Gemisch aus zwei oder mehr Vernetzerharze enthalten. Als Vernetzerharze eignen sich im Rahmen der vorliegenden Erfindung beispielsweise Phenol-Formaldehyd-Harze oder 1,3-Dimethylol-4,5-dihydroxyimidazolidon (4,5-Dihydroxy-N,N'-dimethylolethylenharnstoff) oder Dihydroxymethylethylenharnstoff, Dihydroxymethylpropylenharnstoff oder Dihydroxymethyluron oder deren Thioderivate oder Selbstkondensationsprodukte davon oder Gemische aus zwei oder mehr davon.
Geeignete Phenol-Formaldehyd-Harze lassen sich durch Umsetzung von Phenol oder Phenolderivaten mit Formaldehyd oder Formaldehydderivaten unter Molekulargewichtsaufbau erhalten. Die Herstellung solcher Phenol-Formaldehyd-Harze verläuft nach den allgemeinen Regeln der anorganischen Chemie und ist dem Fachmann bekannt. Im Rahmen der Erfindung geeignete Phenol-Formaldehyd-Harze weisen nach der Vernetzung in einer bevorzugten Ausführungsform der Erfindung einen Erweichungspunkt (ring and ball) von etwa 80 bis etwa 130 °C, beispielsweise etwa 90 bis etwa 120 °C auf.

Im Rahmen der vorliegenden Erfindung geeignete Phenol-Formaldehyd-Harze weisen OH-Gruppen an den aromatischen Phenoleinheiten auf. So können beispielsweise Phenol-Formaldehyd-Harze eingesetzt werden, die eine OH-Zahl von 100 oder weniger, beispielsweise etwa 80, etwa 60 oder etwa 40 oder darunter, beispielsweise etwa 20 oder etwa 10, aufweisen. Geeignete Phenol-Formaldehyd-Harze weisen beispielsweise weniger als 10 Gew.-% freie Methylgruppen, beispielsweise weniger als 8 Gew.-%, weniger 6 Gew.-% oder weniger als 4 Gew.-% oder darunter, auf Geeignete Phenol-Formaldehyd-Harze sind im Wasser selbst dispergierbar und als Dispersion über einen längeren Zeitraum, beispielsweise für einen Zeitraum von 4 Wochen oder mehr, stabil.

Im Rahmen der vorliegenden Erfindung können auch solche Phenol-Formaldehyd-Harze eingesetzt werden, deren Phenoleinheiten in p-Position zur OH-Gruppe substituiert sind. Als Substituenten sind beispielsweise lineare oder verzweigte, gesättigte oder ungesättigte Alkylketten mit 1 bis etwa 22 C-Atomen geeignet.
Die im Rahmen der vorliegenden Erfindung geeigneten Phenol-Formaldehyd-Harze werden üblicherweise als wäßrige Emulsionen mit einem Feststoffgehalt von bis zu etwa 60 Gew.-% vertrieben. Im Rahmen einer weiteren bevorzugten Ausführungsform der vorliegenden Erfindung werden Emulsionen eingesetzt, die eine Viskosität von etwa 50 bis etwa 100 poise bei einem Feststoffgehalt von etwa 45 bis etwa 55 Gew.-% und einem pH-Wert von etwa 6,5 bis etwa 7,5 aufweisen. Geeignete Phenol-Formaldehyd-Harze sind beispielsweise unter dem Namen Resin XR 14277 A (Hersteller: CECA / ELF-Atochem) erhältlich. Es handelt sich um die wäßrige Emulsion eines reaktionsfreudigen Phenolharzes mit geringem Gehalt an freiem Formaldehyd (weniger als 0,1 %). Es ist ein milchiges, weiß bis leicht gelblich gefärbtes Produkt mit einer Viskosität im Bereich von 60 bis 80 Poise und einem pH-Wert im Bereich von 7 bis 7,5, das einen Feststoffgehalt von 49 bis 52 % Gew.-% aufweist.

Ebenfalls geeignet sind die von Schenectady International vertriebenen Vernetzerharze des Typs HRJ und SP, beispielsweise SP-8025, insbesondere die Harze:
- HRJ-11112 (Terpen/Phenol-Basis) mit einer Brookfield-Viskosität von 300 - 750, einer Partikelgröße von etwa 0,5 bis etwa 3,0 µm, einem Feststoffgehalt von etwa 39 bis etwa 47 % und einem pH-Wert von etwa 9-10 sowie
- HRJ-10416 (Alkyl/Phenol-Basis) mit einer Brookfield-Viskosität von 1200 - 2750, einer Partikelgröße von etwa 1,0 bis etwa 5,0 µm, einem Feststoffgehalt von etwa 51 bis etwa 57 % und einem pH-Wert von etwa 4,5 - 6,5.

Als weitere Vernetzerharztypen eignen sich Vernetzerharze auf Basis von Hydroxymethyl-substituierten Imidazolidinonen wie das 1,3-Dimethylol-4,5-dihydroxyimidazolidinon (4,5-Dihydroxy-N,N'-dimethylolethylenharnstoff), Hydroxymethyl-substituierten Pyrimidinonen oder Hydroxymethyl-substituierten Triazinonen oder deren Selbstkondensationsprodukte oder gemischte Kondensate aus zwei oder mehr der genannten Verbindungen, oder ein Gemisch aus zwei oder mehr der genannten Verbindungen. Derartige Vernetzerharze sind beispielsweise unter den Namen Fixapret, Stabitex, Permafresh, Sarcoset, Sumitex, Prox, Knittex, Cassurit, Neuperm oder Depremol kommerziell erhältlich.

Im Rahmen einer weiteren Ausführungsform der vorliegenden Erfindung können als Vernetzerharze die Verbindungen der Fixapret-Reihe eingesetzt werden, beispielsweise Fixapret C-PX, Fixapret COC, Fixapret CP 40 IGD, Fixapret CPK IGD, Fixapret CPNS IGD, Fixapret CP IGD oder Fixapret CPN IGD. Die genannten Verbindungen werden üblicherweise als wäßrige Emulsionen oder Lösungen mit einem Feststoffgehalt zwischen etwa 30 etwa 50 Gew.-% eingesetzt.

Bei Fixapret C-PX handelt es sich um ein Polykondensationsprodukt von Glyoxal-Harnstoff-Formaldehyd (Dimethylglyoxal-Urein) in Wasser, mit einem pH-Wert von 8,0 bis 8,5, einem Feststoffgehalt von 40 bis 42 Gew.-%, einem Gehalt an freiem Formaldehyd von weniger als 1,1 Gew.-%, einer Dichte von 1,03 bis 1,06 g/cm³, einer Apha-Farbe von höchstens 50, das in Gegenwart von MgCl keine Fällung verursacht.

Weitere geeignete Vernetzerharze sind beispielsweise in der unter dem Namen Stabitex (Hersteller: BASF) vertriebenen Produktreihe kommerziell erhältlich. Grundsätzlich sind alle unter dem oben genannten Namen vertriebenen Produkte einsetzbar. Im Rahmen einer bevorzugten Ausführungsform der vorliegenden Erfindung wird als Vernetzerharz jedoch Stabitex ZF oder Stabitex GFA eingesetzt. Die genannten Verbindungen werden üblicherweise als wäßrige Emulsionen oder Lösungen mit einem Feststoffgehalt zwischen etwa 30 etwa 50 Gew.-% eingesetzt.
Die erfindungsgemäßen Polymerdispersionen können die Vernetzerharze in einer Menge von 0 bis etwa 5 Gew.-%, beispielsweise in einer Menge von 0,05 bis etwa 4 Gew.-% oder 0,1 bis etwa 3 Gew.-% enthalten. In einer weiteren bevorzugten Ausführungsform der Erfindung kann eine erfindungsgemäße Polymerdispersion noch ein ionisches Tensid oder ein Gemisch aus zwei oder mehr ionischen Tensiden enthalten. In einer weiteren bevorzugten Ausführungsform der Erfindung weisen solche ionischen Tenside ein Molekulargewicht von weniger als etwa 600 auf.

Es können hierbei anionische, kationische oder ampholytische Tenside, oder Gemische aus zwei oder mehr davon, enthalten sein. Beispiele für geeignete anionische Tenside sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

In einer bevorzugten Ausführungsform der Erfindung enthält eine erfindungsgemäße Polymerdispersion als anionische Tenside Alkyl- und Alkarylphosphate mit etwa 8 bis etwa 22 C-Atomen im organischen Rest, Alkylether- oder Alkaryletherphosphate mit etwa 8 bis etwa 22 C-Atomen im Alkyl- bzw. Alkarylrest und 1 bis etwa 10 EO-Einheiten.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

In einer weiteren bevorzugten Ausführungsform der vorliegenden Erfindung werden die folgenden anionischen Tenside eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{12/16}), Na-Laurylsulfat (C_{12/18}), Na-Cetylstearylsulfat (C_{16/18}), Na-Oleylcetylsulfat (C_{16/18}), Sulfobernsteinsäuremonoester-di-Na-Salz, Fettalkoholsulfosuccinatdi-Na-Salz, Dialkylsulfosuccinat-Na-Salz oder Di-Na-Sulfosuccinamat oder Gemische aus zwei oder mehr davon.

Wenn die erfindungsgemäße Polymerdispersion ionische Tenside enthält, so sind sie in einer bevorzugten Ausführungsform der Erfindung in einer Menge von bis zu etwa 1 Gew.-% oder weniger, beispielsweise bis zu etwa 0,8 Gew.-% oder etwa 0,5 Gew.-%, oder weniger, bezogen auf die gesamte Dispersion, enthalten. Gegebenenfalls können auch geringere Mengen an ionischem Tensid enthalten sein, beispielsweise bis zu etwa 0,2 Gew.-% oder darunter, beispielsweise etwa 0,1 Gew.-%, 0,05 Gew.-% oder 0,02 Gew.-%.

In einer weiteren bevorzugten Ausführungsform kann die füllstoffhaltige Polymerdispersion mindestens ein nichtionisches Tensid mit einem Molekulargewicht von weniger als etwa 600 enthalten.

Beispiele für nichtionische Tenside sind Alkylpolyglykolether, vorzugsweise solche mit etwa 8 bis etwa 20 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin oder Sarkosin, polare Gruppen enthaltende lineare Organo(poly)siloxane, insbesondere solche mit Alkoxygruppen mit bis zu etwa 10 C-Atomen und bis zu etwa 20 EO- oder PO-Gruppen.

Als nicht ionische Tenside geeignet sind beispielsweise Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyceride, Sorbitanmonolaurat, Sorbitanmonooleat, Sorbitan-20EO-monooleat, Sorbitan-20EO-monostearat oder ein Gemisch aus zwei oder mehr davon.

Im Rahmen einer weiteren bevorzugten Ausführungsform der vorliegenden Erfindung enthält die erfindungsgemäße Dispersion, beispielsweise zusätzlich zu einem Puffersystem oder anstatt eines solchen, noch eine oder mehrere Verbindungen, die zur Reaktion mit einer starken Mineralsäure, wie sie beispielsweise bei der Verwendung der sauren Metallsalze im Rahmen der vorliegenden Erfindung freigesetzt werden kann, unter Neutralisierung derselben reagieren kann. Geeignet sind hierzu beispielsweise Amine, die unter Protonierung mit einer Mineralsäure umgesetzt werden können. Geeignete Amine sind beispielsweise primäre, sekundäre oder tertiäre Amine, die gegebenenfalls noch eine oder mehrere funktionelle Gruppen aufweisen können. Besonders geeignet sind Amine, die eine oder mehrere OH-Funktionalitäten aufweisen, beispielsweise Ethanolamin, Diethanolamin oder insbesondere Triethanolamin. Weiterhin geeignet sind Verbindungen mit mindestens einer Epoxygruppe, die sich ebenfalls zu diesem Zweck eignen.

Besonders geeignet sind hierzu beispielsweise epoxidierte natürliche Fette oder Fettsäuren, wie sie beispielsweise unter dem Namen Edenol® von der Firma Henkel vertrieben werden. Besonders geeignet sind beispielsweise die Produkte Edenol D81, Edenol D82 und Edenol D83, die in der nachfolgenden Tabelle charakterisiert werden:

| | **EDENOL D 81** | **EDENOL D 82** | **EDENOL D 83** |
|---|---|---|---|
| Oxirangehalt | 6,3-7,0% | 6,5-7,0 | 6,5-7,0% |
| Säurepunkt | 0,0-0,5 | 0,0-0,3 | 0,0-0,3 |
| Jodzahl | 0,0-5 | 0,0-2,5 | 0,0-2,5 |
| Brechungsindex, 20°C | 1,472-1,474 | 1,472-1,474 | 1,472-1,474 |

In einer weiteren Ausführungsform der Erfindung enthält eine erfindungsgemäße Polymerdispersion bis zu etwa 30 Gew.-%, bezogen auf die gesamte Dispersion, an Zusatzstoffen. Zu den Zusatzstoffen zählen beispielsweise Stabilisatoren, Entschäumer, Antioxidantien, Photostabilisatoren, Pigmentverteiler, Füllstoffe, pH-Regler, Weichmacher und dergleichen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester, sowie Gemische aus zwei oder mehr davon. Besonders geeignet sind die asymmetrischen Ester der difunktionellen, aliphatischen oder aromatischen Dicarbonsäuren, beispielsweise das Veresterungsprodukt von Adipinsäuremonooctylester mit 2-Ethylhexanol (Edenol DOA, Fa. Henkel, Düsseldorf) oder das Veresterungsprodukt von Phthalsäure mit Butanol.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Die erfindungsgemäße Zubereitung kann, wenn eine Verwendung als Klebstoff vorgesehen ist, bis zu etwa 10 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS).

In einer weiteren bevorzugten Ausführungsform der Erfindung weist die Polymerdispersion etwa
- 30 bis 70 Gew.-% eines wasserdispergierbaren, insbesondere eines durch Emulsionspolymerisation herstellbaren Polymeren oder eines Gemischs aus zwei oder mehr davon
- 0,5 bis 15 Gew.-% eines Schutzkolloids oder eines Gemischs aus zwei oder mehr Schutzkolloiden
- 0 bis 0,5 Gew.-% eines nichtionischen Tensids,
- 0 bis 0,1 Gew.-% eines ionischen Tensids,
- 0 bis 30 Gew.-% weitere Zusatzstoffe und
- eine der oben genannten Mengen an Markierungselementen sowie
- Wasser ad 100 Gew.-%
auf.

Eine erfindungsgemäße Polymerdispersion lässt sich grundsätzlich auf beliebige Weise durch Vermischen einer Dispersion eines wasserdispergierbaren Polymeren oder eines Gemischs aus zwei oder mehr solcher Polymerer in Wasser oder einer wäßrigen Umgebung mit einem der bereits oben genannten Elemente, in ihrer Salzform, herstellen.

Gegenstand der vorliegenden Erfindung ist daher auch ein Verfahren zur Herstellung einer erfindungsgemäßen Polymerdispersion, bei dem eine Dispersion eines in Wasser dispergierbaren Polymeren mit mindestens zwei unterschiedlichen wasserlöslichen Salzen ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten, versetzt wird und die Gesamtmenge an Ionen der Elemente ausgewählt aus der oben genannten Gruppe bezogen auf die gesamte Dispersion mindestens 10 ppm beträgt.

In einer bevorzugten Ausführungsform der vorliegenden Erfindung wird die erfindungsgemäße Polymerdispersion durch Emulsionspolymerisation hergestellt. Unter "Emulsionspolymerisation" wird im Rahmen der vorliegenden Erfindung ein Verfahren zur Polymerisation verstanden, bei dem in Wasser unlösliche oder schlecht lösliche Monomere mit Hilfe von Emulgatoren in Wasser emulgiert und unter Verwendung wasserlöslicher Initiatoren polymerisiert werden. Geeignete Verfahren zur Emulsionspolymerisation werden beispielsweise in Comprehensive Polymer Chemistry, 4, 171-218, Elias (5. Auflage), 2, 93ff. Encyclopaedia of Polymer Science and Engineering, 12, 512ff. oder Encyclopaedia of Polymer Science and Technology, 5, 801ff. beschrieben. Weitere geeignete Referenzen sind beispielsweise aus den dem Fachmann bekannten lexikalischen Nachschlagewerken Ullmann's Enzyklopädie der technischen Chemie, Houben-Weyl (E20, 218-268) oder *Kirk-Othmer* bekannt. Auf die genannten Literaturstellen wird hiermit ausdrücklich Bezug genommen und die Offenbarung der genannten Stellen wird als Bestandteil der Offenbarung des vorliegenden Textes betrachtet.

Als Polymerisationsinitiatoren können bei der Herstellung der erfindungsgemäßen Polymerdispersionen sowohl wasserlösliche als auch öllösliche Polymerisationsinitiatoren verwendet werden. Als Polymerisationsinitiatoren besonders geeignet sind wasserlösliche Initiatoren wie tert.-Butylhydroperoxid, Natriumperoxodisulfat, Peroxodischwefelsäure, Cumolhydroperoxid, Azoverbindungen wie Diazoisobuttersäuredinitril oder Benzoylperoxid. Ebenfalls geeignet sind Redoxinitiatoren, d. h., Systeme die aus Oxidations- und Reduktionsmitteln bestehen. Wasserlösliche Redoxinitiatoren enthalten in vielen Fällen Übergangsmetalle, z. B. Fe/HO (I), es können jedoch auch andere Basiskomponenten enthalten sein, z. B. die Systeme Peroxysulfate/Metabisulfate, Peroxysulfate/Thiosulfate oder Peroxide/Thiosulfate.

Im Rahmen einer bevorzugten Ausführungsform der Erfindung werden als Polymerisationsinitiatoren Natriumpersulfat, Kaliumpersulfat oder Ammoniumpersulfat eingesetzt.

Die Menge an eingesetztem Polymerisationsinitiator liegt im Rahmen der vorliegenden Erfindung in der Regel bei etwa 0,01 bis etwa 0,5 Gew.-%, bezogen auf die gesamte Dispersion. In einer bevorzugten Ausführungsform der Erfindung liegt die gesamte eingesetzte Menge an Polymerisationsinitiator bei etwa 0,03 bis etwa 0,2 Gew.-%, beispielsweise bei etwa 0,05 bis etwa 0,15 Gew.-%.

Die Gesamtmenge des Polymerisationsinitiators kann im Rahmen der vorliegenden Erfindung bereits zu Beginn der Polymerisation im Reaktionsgemisch vorliegen. In einer bevorzugten Ausführungsform der Erfindung wird der Polymerisationsinitiator jedoch in mindestens zwei Chargen zu unterschiedlichen Zeitpunkten der Polymerisationsreaktion zugegeben. So kann z. B. die Zugabe eines Teils der gesamten Menge des Polymerisationsinitiators vor der Monomerzugabe erfolgen, während die Zugabe der verbleibenden Restmenge portionsweise oder kontinuierlich während der Monomerzugabe, oder nach Beendigung der Monomerzugabe erfolgen kann.

Die im Rahmen der vorliegenden Erfindung zur Markierung der Polymerdispersion vorgesehenen Salze können ebenfalls vor, während oder nach der Polymerisationsreaktion zugegeben werden. Es ist dabei vom Rahmen der vorliegenden Erfindung mit umfasst, dass entsprechende Klebstoffe beispielsweise als 2K-Systeme formuliert sind und die Vermischung von Harz und Härter erst vom Anwender vorgenommen wird. In diesen Fällen ist es möglich, dass das zur Markierung eingesetzte Element sich im Härter befindet.

Im Rahmen einer bevorzugten Ausführungsform werden die entsprechenden Salze, vorzugsweise in gelöster Form, jedoch nach der Polymerisationsreaktion dem Reaktionsgemisch zugefügt und durch entsprechende Homogenisierungsverfahren, beispielsweise durch Rühren, homogen in der Polymerdispersion verteilt. Es hat sich dabei als bevorzugt herausgestellt, wenn zur Markierung der Polymerdispersion Salze eingesetzt werden, die in den Polymerdispersionen vollständig löslich sind.

Gegenstand der vorliegenden Erfindung ist daher auch ein Verfahren zur Herstellung einer erfindungsgemäßen Polymerdispersion, bei dem vor während oder nach einer Emulsionspolymerisation zur Herstellung eines durch Emulsionspolymerisation herstellbaren Polymeren mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten, zugegeben werden und die Gesamtmenge an zugegebenen Ionen der Elemente ausgewählt aus den oben genannten Gruppen bezogen auf die gesamte Dispersion mindestens 10 ppm beträgt.

Die weiteren in der Polymerdispersion enthaltenen Bestandteile, beispielsweise Schutzkolloide, Tenside und Zusatzstoffe können, sofern die Anwesenheit solcher Zusatzstoffe in einer erfindungsgemäßen Polymerdispersion gewünscht ist, vor, während oder nach der Emulsionspolymerisation zugegeben werden.

Die Vernetzerharze können, sofern eine Zugabe solcher Vernetzerharze vorgesehen und gewünscht ist, ebenfalls vor, während oder nach der Emulsionspolymerisation zugegeben werden. Die Zugabe kann dabei beispielsweise kurz vor Beginn oder mit dem Beginn der Polymerisationsreaktion erfolgen. Es hat sich gezeigt, dass die Zugabe des Vernetzerharzes vor oder während des Polymerisationsprozesses zu Produkten führt, deren Lagerstabilität bei hohen Temperaturen, beispielsweise bei etwa 30 bis etwa 50°C, gegenüber Produkten, bei denen das Vernetzerharz nach der Polymerisation zugegeben wurde, erhöht ist.

In einer bevorzugten Ausführungsform der vorliegenden Erfindung können als Vernetzerharze 1,3-Dimethylol-4,5-dihydroxyimidazolidinon (4,5-Dihydroxy-N,N'-dimethylolethylenhamstoff) oder Dihydroxymethylethylenharnstoff, Dihydroxymethylpropylenharnstoff oder Dihydroxymethyluron oder deren Thioderivate entweder in Form der jeweiligen angegebenen Verbindungen, deren Selbstkondensationsprodukten oder gemischten Kondensaten aus zwei oder mehr der genannten Verbindungen oder Gemische aus zwei oder mehr der genannten Verbindungen oder Kondensate zugegeben werden.

In einer weiteren bevorzugten Ausführungsform der vorliegenden Erfindung wird die Emulsionspolymerisation in Gegenwart eines Schutzkolloids oder eines Gemischs aus zwei oder mehr Schutzkolloiden durchgeführt.

Die erfindungsgemäßen Polymerdispersionen eignen sich zur Oberflächenbeschichtung oder zur Verklebung von gleichen oder unterschiedlichen Substraten, wobei sowohl Substrate mit glatter Oberfläche als auch Substrate mit rauen oder porösen Oberflächen beschichtet bzw. geklebt werden können. Geeignet sind beispielsweise natürliche oder künstliche Substrate, beispielsweise Fußbodenbeläge, Wandbeläge, Filz, Holz, Holzwerkstoffe und dergleichen. Im Rahmen einer bevorzugten Ausführungsform der vorliegenden Erfindung werden die erfindungsgemäßen Polymerdispersionen zur Beschichtung oder Verklebung von Substraten auf der Basis von natürlichen Rohstoffen, beispielsweise zur Verklebung von Holz, Holzwerkstoffen, Papier oder Pappe verwendet.

Gegenstand der vorliegenden Erfindung ist daher auch die Verwendung der eifindungsgemäßen Polymerdispersionen in Klebstoffen oder Oberflächenbeschichtungsmitteln wie Lacken, Dispersionsfarben, Leimen, Klebstoffen oder sonstigen Oberflächenbeschichtungen.

Ein weiterer Gegenstand der Erfindung ist demnach auch ein Klebstoff oder ein Oberflächenbeschichtungsmittel, enthaltend eine erfindungsgemäße oder eine nach einem erfindungsgemäßen Verfahren hergestellte Polymerdispersion.

Ein weiterer Gegenstand der vorliegenden Erfindung betrifft die Verwendung eines Gemischs aus mindestens zwei unterschiedlichen wasserlöslichen Salzen ausgewählt aus der Gruppe der Salze der Elemente Li, Ba, Sr, B, Co, Cu, Mn, Mo, Ni, Ag, Pb, Zn, W, La, Ce oder Sn, wobei mindestens zwei der wasserlösliche Salze jeweils ein unterschiedliches Ion ausgewählt aus der Gruppe bestehend aus den Ionen von Li, Ba, Sr, B, Co, Cu, Mn, Mo, Ni, Ag, Pb, Zn, W, La, Ce oder Sn enthalten, zur Markierung von Dispersionsklebstoffen.

Die erfindungsgemäßen Dispersionen lassen sich durch analytische Methoden auf ihren Gehalt an den oben genannten Elementen hin untersuchen und so identifizieren.

Die Erfindung wird nachfolgend beispielhaft näher erläutert.

### Beispiele:

### Herstellung der markierten Klebstoffe :

### Beispiel 1

30 Gramm Lithiumchlorid wurden in 70 Gramm destilliertem Wasser gelöst. 0,282 Gramm dieser Salzlösung wurde dann in 100 Gramm Polyvinylacetatdispersion eingerührt. Anschließend wurden in 90 Gramm destilliertem Wasser 10 Gramm Zinn-II-Sulfat gelöst. Von dieser Lösung wurden dem bereits mit Li markiertem Klebstoff 0,083 g zugesetzt und homogen eingerührt. Die Konzentration an Lithium, bezogen auf das Gewicht der gesamten Dispersion, lag somit bei 138 ppm und die Konzentration an Sn-Ionen, bezogen auf das Gewicht der gesamten Dispersion, bei 46 ppm. Das Gewichtsverhältnis Li zu Zinn betrug 3:1. Mit dem so erhaltenen markierten Klebstoff wurden dann Massivholzverleimungen durchgeführt. Dazu wurden zwei massive Bretter mit den Maßen 40 cm x 12,5 cm x 0,5 cm aufeinandergeleimt. Die Holzfeuchtigkeit der verwendeten Hölzer lag zwischen 8 und 9 %. Der Klebstoffauftrag erfolgte einseitig und die Klebstoffmenge betrug 150 g/m². Nach dem Fügen der Bretter wurden diese mit einem Pressdruck von 0,5 N/mm² über einen Zeitraum von 30 Minuten bei Raumtemperatur gepresst. Die Verleimung erfolgte praxisgerecht.

Der Prüfkörper wurde dann auf einer Kreissäge besäumt und anschließend auf einem Dickenhobel von beiden Seiten gleichmäßig gehobelt. Von jeder Seite wurden 3,5 mm abgehobelt. Es entstand ein Prüfkörper, der 3 mm dick war und in der Mitte eine Klebstofffuge aufwies. Für die analytische Aufarbeitung wurde mittels eines Handhobels Späne von einer Dicke von 0,2 mm an der Schmalseite, parallel zur Faser, abgehobelt. Die so erhaltenen Proben wurden aufgeschlossen und anschließend analytisch mit ICP-OES untersucht.

Als Null-Probe wurde der Prüfkörper unter gleichen Bedingungen verleimt und behandelt aber dabei lediglich der Klebstoff ohne Markierung eingesetzt.

Analysenergebnisse Beispiel 1 in mg/KG Probe. (ppm)

| | Null-Probe | markierte Probe |
|---|---|---|
| Li | < 1 | 9 |
| Sn | < 1 | 3 |

Der Klebstoff konnte eindeutig und im zugesetzten Verhältnis nachgewiesen werden

### Beispiel 2

30 Gramm Lithiumchlorid wurden in 70 Gramm destilliertem Wasser gelöst. 0,282 Gramm dieser Salzlösung wurde dann in 100 Gramm Polyvinylacetatdispersion eingerührt. Anschließend wurde in 90 Gramm destilliertem Wasser 10 Gramm Strontiumchlorid Hexahydrat gelöst. Von dieser Lösung wurden dann dem bereits mit Li markiertem Klebstoff 0,200 g zugesetzt und homogen eingerührt. Die Konzentration an Lithium, bezogen auf das Gewicht der gesamten Dispersion, lag somit bei 138 ppm und die Konzentration an Sr, bezogen auf das Gewicht der gesamten Dispersion, bei 50 ppm. Das Gewichtsverhältnis Li zu Sr betrug 2,76:1. Mit dem so erhaltenen markierten Klebstoff wurden dann Massivholzverleimungen nach oben beschriebenem Verfahren durchgeführt und anschließend ebenfalls nach gleichem Verfahren die Proben für die Analytik vorbereitet.

Analysenergebnisse Beispiel 2 in mg/KG Probe. (ppm)

| | Null-Probe | markierte Probe |
|---|---|---|
| Li | < 1 | 9 |
| Sr | < 1 | 3 |

Der Klebstoff konnte eindeutig und im zugesetzten Verhältnis nachgewiesen werden.

### Beispiel 3

30 Gramm Lithiumchlorid wurden in 70 Gramm destilliertem Wasser gelöst. 0,282 Gramm dieser Salzlösung wurden dann in 100 Gramm Polyvinylacetatdispersion eingerührt. Anschließend wurden in 90 Gramm destilliertem Wasser 10 Gramm Strontiumchlorid Hexahydrat gelöst. Von dieser Lösung wurden dem bereits mit Li markiertem Klebstoff 0,100 g zugesetzt und homogen eingerührt. Die Konzentration an Lithium, bezogen auf das Gewicht der gesamten Dispersion, lag somit bei 138 ppm und die Konzentration an Sr bezogen auf das Gewicht der gesamten Dispersion, bei 25 ppm. Das Gewichtsverhältnis Li zu Sr betrug 5,5:1. Mit dem so erhaltenen markierten Klebstoff wurden dann Massivholzverleimungen gemäß dem oben beschriebenem Verfahren durchgeführt und anschließend ebenfalls nach gleichem Verfahren die Proben für die Analytik vorbereitet.

Analysenergebnisse Beispiel 3 in mg/KG Probe. (ppm)

| | Null-Probe | markierte Probe |
|---|---|---|
| Li | < 1 | 10 |
| Sr | < 1 | 2 |

Der Klebstoff konnte eindeutig und im zugegebenen Verhältnis nachgewiesen werden.

Um auszuschließen, dass sich das Ergebnis im Laufe der Zeit verändert, wurden die Prüfplatten über einen Zeitraum von 6 Monaten praxisnaher Freibewitterung ausgesetzt und anschließend nach dem gleichen Verfahren vorbereitet und analytisch untersucht.

### Ergebnis nach Bewitterung:

Analysenergebnisse in mg /KG Probe. (ppm)

| | Beispiel 1 | Beispiel 2 | Beispiel 3 |
|---|---|---|---|
| Li | 9 | 9 | 10 |
| Sn | 3 | | |
| Sr | | 3 | 2 |

Ein Einfluss bei Bewitterung oder Alterung konnte nicht festgestellt werden.

Zum Einsatz kamen folgende Substanzen :

Mowilith LDL 2555 W, Polyvinylacetatdispersion der Fa. Celanese, Festkörpergehalt ca. 50 %
Lithiumchlorid 99 % ig der Fa. Merk
Zinn-II-Sulfat der Fa. Fluka
Strontiumchlorid Hexahydrat der Fa. Fluka

Die markierten Klebstoffe wurden auf ihre Eigenschaften hin untersucht und mit der unmarkierten Basisdispersion verglichen. Außerdem wurden die markierten Klebstoffe einem Lagertest unterzogen.

Die Ergebnisse des Lagertests sind der nachfolgenden Tabelle zu entnehmen.

| Prüfung | Null-Probe | Beispiel 1 | Beispiel 2 | Beispiel 3 |
|---|---|---|---|---|
| EN 14257 | 7,4 N/mm² | 7,3 N/mm² | 7,4 N/mm² | 7,3 N/mm² |
| EN 204 D3 | 2,3 N/mm² | 2,4 N/mm² | 2,3 N/mm² | 2,2 N/mm² |
| offene Zeit | 10 min. | 10 min. | 10 min. | 10 min. |
| Viskosität | 12.600 mPas | 12.500 mPas | 12.400 mPas | 12.500 mPas |
| pH-Wert | 3,0 | 2,9 | 3,0 | 3,0 |
| MFT | 4°C | 4°C | 4°C | 4°C |
| QZF | 2850 N | 2800 N | 2900 N | 2750 N |

Ein signifikanter Unterschied der Qualitäten konnte nicht festgestellt werden. Leichte Abweichungen liegen im Bereich der Messmethodengenauigkeit.

Nach Wärmelagerung (Lagertest) wurden folgende Eigenschaften ermittelt:

| | | | | |
|---|---|---|---|---|
| Prüfung | Null-Probe | Beispiel 1 | Beispiel 2 | Beispiel 3 |
| EN 14257 | 7,5 N/mm² | 7,4 N/mm² | 7,4 N/mm² | 7,5 N/mm² |
| EN 204 D3 | 2,1 N/mm² | 2,1 N/mm² | 2,2 N/mm² | 2,2 N/mm² |
| offene Zeit | 10 min. | 11 min. | 11 min. | 10 min. |
| Viskosität | 13.900 mPas | 13.600 mPas | 13.400 mPas | 13.800 mPas |
| pH-Wert | 2,8 | 2,8 | 2,9 | 2,8 |
| MFT | 2°C | 2°C | 2°C | 2°C |
| QZF | 3150 N | 3100 N | 2950 N | 3200 N |

Die Werte zeigen, dass sich der Klebstoff in seinen Eigenschaften nur geringfügig verändert. Diese Veränderungen sind dem Fachmann bekannt und gelten als normal und akzeptabel. Leichte Abweichungen liegen im Bereich der Messmethodengenauigkeit.

### Prüfmethoden:

### Bestimmung der offenen Zeit :

Die Messung erfolgte an konditionierter, ungedämpfter massiver Buche (Fagus sylvatica) mit einer Holzfeuchte von 8-10 % und einem Klebstoffauftrag von 150µ und 200µ.

Zur Messung wird unter konstanten klimatischen Bedingungen bei 23°C und 50 % r.F. durchgeführt. Der zu prüfende, bei 23°C gelagerte, Klebstoff wird mit einem 150 µ und 200 µ Spiralrakel aufgetragen. Im Abstand von einer Minute wird der Klebstofffilm auf Hautbildung getestet. Ist eine Hautbildung zu erkennen, wird von dem ermittelten Wert eine Minute abgezogen. Es wird ein Mittelwert von 150 und 200 µ gebildet.

Die Angabe erfolgt in Minuten.

### Bestimmung der Wärmefestigkeit:

DIN EN 14257, Entwurf November 2001

Bestimmung der Klebefestigkeit von Längsklebungen im Zugversuch in der Wärme (Watt 91)

Die Angabe erfolgt in N/mm².

Bestimmung der Wasserfestigkeit:

DIN EN 204 September 2001 (EN 204:2001)

Klassifizierung von thermoplastischen Holzklebstoffen für nichttragende Anwendungen Geprüft wurde die Beanspruchungsgruppe D3 (Mindestanforderung. 2,0 N/mm²)

Die Angabe erfolgt in N/mm²

Bestimmung der Viskosität:
Brookfield Digital Viscometer RTVDV-II bei 23°C
Viskositätsmessung nach EN ISO 2555
Gemessen mit Spindel 6 bei 20 Upm und 23°C
Die Angabe erfolgt in mPas

Bestimmung des pH-Wertes:
pH-Wert Messung nach DIN 53785 / ISO 1148
Microprocessor pH-Meter pH 537 WTW pH - Meter CG 818, Fa. Schott Einstabmesskette Typ N61

Die Angabe erfolgt dimensionslos

Bestimmung der MFT:
MFT nach DIN 53787 / ISO 2115
Die Angabe erfolgt in °C.

### Bestimmung der Querzugsanfangsfestigkeit (QZF)

Die Prüfung erfolgt an stumpf verleimter massiver, bei 23°C und 50 % relativer Luftfeuchte gelagerter, ungedämpfter und gehobelter Buche (Fagus sylvatica) mit einer Holzfeuchtigkeit von 8 bis 9 %. Dazu werden 5 Buchenhölzer mit den Maßen Länge=20 cm, Breite=4 cm, Dicke=2 cm mit den Schmalseiten so aneinandergeleimt, dass eine Gesamtfläche von 20 mal 20 cm entsteht. Die einzelnen Buchenhölzer sind jeweils am Kopfende 24 mm tief, im Winkel von 20° schräg abgeschnitten, sodass bei der Verleimung der Einzelteile ein gleichschenkliger Keilausschnitt mit einem Gesamtwinkel beider Schenkel von 40° entsteht, der eine Tiefe von 24 mm und eine breite Schulter von 18,5 mm hat. So entsteht an jeder Klebefuge ein Keilausschnitt von 2 cm Breite.

Die Prüfhölzer sind vor der Prüfung für mindestens 2 Wochen unter konstanten Bedingungen bei 23°C 50 % r.F. zu konditionieren, um sicherzustellen, dass sich eine Ausgleichsholzfeuchte zwischen 8 und 9 % einstellt. Die Verklebung der Holzteile erfolgt unter definierten klimatischen Bedingungen bei 23°C und 50 % r.F., wobei der Klebstoff selbst ebenfalls eine Temperatur von 23°C haben soll. Der Klebstoffauftrag erfolgt einseitig mit einem 200µ Spiralrakel. Gefügt werden die Teile nach einer Ablüftezeit von 1 Minute nach Applikation des Klebstoffes. Es wird ein Pressdruck zwischen 0,3 und 0,5 N/mm² aufgebracht. Nach einer Presszeit von 20 min. werden die gespannten Teile entspannt und unmittelbar danach geprüft. Die Messung selbst erfolgt an einer mechanischen Zerreismaschine, bei der eine Kraftumlenkungsmechanik angebracht wurde, bei der die Prüfmaschine von einer Zugprüfungsmaschine zu einer Druckprüfmaschine umgewandelt werden kann. Zum Spalten der Prüfkörper in der Klebefläche wurde an der Kraftaufnahme ein massiver, polierter Alukeil mit einem Flankenwinkel von 20° montiert, der exakt in die Auskerbung der Prüfkörper passt, ohne dabei den Flankengrund zu berühren. Mit einer Vorschubgeschwindigkeit von 50 mm/min. wurde dann der Aluminiumkeil jeweils in die Auskerbung der Holzprüfkörper mit konstanter Geschwindigkeit gefahren und die Kraft in N ermittelt, die zum Spalten der Klebefuge notwendig war. Die vier Klebefugen werden im Abstand von jeweils 10 Sekunden gespalten. Aus den vier ermittelten Werten der vier Klebstofffugen wird dann das arithmetische Mittel errechnet.

### Angabe Kraft in N

Prüfung auf Lagerstabilität:

Der zu prüfende Klebstoff wird in einer 250 ml Glasflasche mit einem wasserdampfundurchlässigen Verschluss bei 40°C +-1°C über einen Zeitraum von drei Monaten gelagert. Nach dieser Zeit erfolgt die Überprüfung der Kenndaten.

## Patentansprüche

1. Polymerdispersion, enthaltend Wasser, mindestens ein wasserdispergierbares Polymeres und mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten und die Gesamtmenge an Ionen ausgewählt aus der oben genannten Gruppe mindestens 10 ppm beträgt.

2. Polymerdispersion nach Anspruch 1, **dadurch gekennzeichnet, dass** sie als wasserdisperglerbares Polymeres ein durch Emulsionspolymerisation hergestelltes Polymeres enthält.

3. Polymerdispersion nach einem der Ansprüche 1 oder 2, **dadurch gekennzeichnet, dass** sie mindestens zwei der Salze in einem Verhältnis innerhalb eines Bereichs von 1:100 bis 100:1 enthält.

4. Polymerdispersion nach einem der Ansprüche 1 bis 3, **dadurch gekennzeichnet, dass** sie mindestens 30 Gew.-% eines durch Emulsionspolymerisation hergestellten Polymeren enthält.

5. Polymerdispersion nach einem der Ansprüche 1 bis 4, **dadurch gekennzeichnet, dass** sie als wasserdispergierbares Polymeres Polyvinylacetat oder ein unter Verwendung von Vinylacetat hergestelltes Copolymeres enthält.

6. Verfahren zur Herstellung einer Polymerdispersion gemäß einem der Ansprüche 1 bis 5, bei dem eine Dispersion eines in Wasser dispergierbaren Polymeren mit mindestens zwei unterschiedlichen wasserlöslichen Salzen ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten, versetzt wird und die Gesamtmenge an Salzen der Elementen ausgewählt aus der oben genannten Gruppe bezogen auf die gesamte Dispersion mindestens 10 ppm beträgt.

7. Verfahren zur Herstellung einer Polymerdispersion gemäß einem der Ansprüche 1 bis 5, bei dem vor, währen oder nach einer Emulsionspolymerisation zur Herstellung eines durch Emulsionspolymerisation herstellbaren Polymeren mindestens zwei unterschiedliche wasserlösliche Salze ausgewählt aus der Gruppe der wasserlöslichen Salze der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten, zugegeben werden und die Gesamtmenge an Ionen der Elemente ausgewählt aus der oben genannten Gruppe bezogen auf die gesamte Dispersion mindestens 10 ppm beträgt.

8. Klebstoff oder Oberflächenbeschichtungsmittel, enthaltend eine Polymerdispersion nach einem der Ansprüche 1 bis 5 oder eine nach Anspruch 6 oder 7 hergestellte Polymerdispersion.

9. Verwendung einer Polymerdispersion gemäß einem der Ansprüche 1 bis 5 oder einer nach Anspruch 7 oder 8 hergestellten Polymerdispersion in Klebstoffen oder Oberflächenbeschichtungsmitteln.

10. Verwendung eines Gemisches aus mindestens zwei unterschiedlichen wasserlöslichen Salzen der Elemente Li, Ba, Sr, B, Co, Cu, Mn, Mo, Ni, Ag, Pb, Zn, W, La, Ce oder Sn, wobei mindestens zwei der wasserlöslichen Salze jeweils ein unterschiedliches Ion ausgewählt aus der Gruppe bestehend aus den Ionen der Elemente Li, Ba, Sr, B, Co, Cu, Mn, Mo, Ni, Ag, Pb, Zn, W, La, Ce oder Sn enthalten, zur Markierung von Dispersionklebstoffen.

## Claims

1. A polymer dispersion containing water, at least one water-dispersible polymer and at least two different water-soluble salts selected from the group of water-soluble salts of the elements Li, Ba, Sr, B, Co, Cu, Mn, Mo, Ni, Ag, Pb, Zn, W, La, Ce or Sn, at least two of the water-soluble salts in each case containing a different ion selected from the group consisting of ions of the elements Li, Ba, Sr, B, Co, Cu, Mn, Mo, Ni, Ag, Pb, Zn, W, La, Ce or Sn and the total quantity of ions selected from the above-mentioned group amounting to at least 10 ppm.

2. A polymer dispersion according to claim 1, **characterised in that** it contains a polymer produced by emulsion polymerisation as the water-dispersible polymer.

3. A polymer dispersion according to either of claim 1 or claim 2, **characterised in that** it contains at least two of the salts within a range from 1:100 to 100:1.

4. A polymer dispersion according to any of claims 1 to 3, **characterised in that** it contains at least 30% by weight of a polymer produced by emulsion polymerisation.

5. A polymer dispersion according to any of claims 1 to 4, **characterised in that**, as the water-dispersible polymer, it contains polyvinyl acetate or a copolymer produced using vinyl acetate.

6. A process for the production of a polymer dispersion according to any of claims 1 to 5, in which a dispersion of a water-dispersible polymer is combined with at least two different water-soluble salts selected from the group of water-soluble salts of the elements Li, Ba, Sr, B, Co, Cu, Mn, Mo, Ni, Ag, Pb, Zn, W, La, Ce or Sn, at least two of the salts in each case containing a different ion selected from the group consisting of ions of the elements Li, Ba, Sr, B, Co, Cu, Mn, Mo, Ni, Ag, Pb, Zn, W, La, Ce or Sn, and the total quantity of salts of the elements selected from the above-mentioned group amounts to at least 10 ppm, based on the dispersion as a whole.

7. A process for the production of a polymer dispersion according to any of claims 1 to 5, in which at least two different water-soluble salts selected from the group of water-soluble salts of the elements Li, Ba, Sr, B, Co, Cu, Mn, Mo, Ni, Ag, Pb, Zn, W, La, Ce or Sn, at least two of the water-soluble salts in each case containing a different ion selected from the group consisting of ions of the elements Li, Ba, Sr, B, Co, Cu, Mn, Mo, Ni, Ag, Pb, Zn, W, La, Ce or Sn, are added before, during or after an emulsion polymerisation for the production of a polymer obtainable by emulsion polymerisation and the total quantity of ions of the elements selected from the above-mentioned group amounts to at least 10 ppm, based on the dispersion as a whole.

8. An adhesive or surface coating agent containing a polymer dispersion according to any of claims 1 to 5 or a polymer dispersion produced according to claim 6 or claim 7.

9. Use of a polymer dispersion according to any of claims 1 to 5 or a polymer dispersion produced according to claim 7 or claim 8 in adhesives or surface coating agents.

10. Use of a mixture of at least two different water-soluble salts of the elements Li, Ba, Sr, B, Co, Cu, Mn, Mo, Ni, Ag, Pb, Zn, W, La, Ce or Sn, at least two of the water-soluble salts in each case containing a different ion selected from the group consisting of ions of the elements Li, Ba, Sr, B, Co, Cu, Mn, Mo, Ni, Ag, Pb, Zn, W, La, Ce or Sn, for marking dispersion adhesives.

## Revendications

1. Dispersion polymère, contenant de l'eau, au moins un polymère apte à être dispersé dans l'eau et au moins deux sels différents solubles dans l'eau, choisis parmi le groupe des sels solubles dans l'eau des éléments Li, Ba, Sr, B, Co, Cu, Mn, Mo, Ni, Ag, Pb, Zn, W, La, Ce ou Sn, au moins deux des sels solubles dans l'eau contenant respectivement un ion différent choisi parmi le groupe constitué par les ions des éléments Li, Ba, Sr, B, Co, Cu, Mn, Mo, Ni, Ag, Pb, Zn, W, La, Ce ou Sn et la quantité totale des ions choisis parmi le groupe mentionné ci-dessus s'élevant à au moins 10 ppm.

2. Dispersion polymère selon la revendication 1, **caractérisée en ce qu'**elle contient, à titre de polymère apte à être dispersé dans l'eau, un polymère préparé par polymérisation en émulsion.

3. Dispersion polymère selon l'une quelconque des revendications 1 ou 2, **caractérisée en ce qu'**elle contient au moins deux des sels dans un rapport qui se situe dans la plage de 1:100 à 100:1.

4. Dispersion polymère selon l'une quelconque des revendications 1 à 3, **caractérisée en ce qu'**elle contient un polymère préparé par polymérisation en émulsion à concurrence d'au moins 30 % en poids.

5. Dispersion polymère selon l'une quelconque des revendications 1 à 4, **caractérisée en ce qu'**elle contient, à titre de polymère apte à être dispersé dans l'eau, de l'acétate de polyvinyle ou bien un copolymère préparé en utilisant de l'acétate de vinyle.

6. Procédé pour la préparation d'une dispersion polymère selon l'une quelconque des revendications 1 à 5, dans lequel on ajoute, à une dispersion d'un polymère apte à être dispersé dans l'eau, au moins deux sels différents solubles dans l'eau, choisis parmi le groupe des sels solubles dans l'eau des éléments Li, Ba, Sr, B, Co, Cu, Mn, Mo, Ni, Ag, Pb, Zn, W, La, Ce ou Sn, au moins deux des sels solubles dans l'eau contenant respectivement un ion différent choisi parmi le groupe constitué par les ions des éléments Li, Ba, Sr, B, Co, Cu, Mn, Mo, Ni, Ag, Pb, Zn, W, La, Ce ou Sn, la quantité totale des sels des éléments choisis parmi le groupe mentionné ci-dessus, rapportée à la dispersion totale, s'élevant à au moins 10 ppm.

7. Procédé pour la préparation d'une dispersion polymère selon l'une quelconque des revendications 1 à 5, dans lequel, avant, pendant ou après une polymérisation en émulsion pour la préparation d'un polymère qui peut être préparé via une polymérisation en émulsion, on ajoute au moins deux sels différents solubles dans l'eau, choisis parmi le groupe des sels solubles dans l'eau des éléments Li, Ba, Sr, B, Co, Cu, Mn, Mo, Ni, Ag, Pb, Zn, W, La, Ce ou Sn, au moins deux des sels solubles dans l'eau contenant respectivement un ion différent choisi parmi le groupe constitué par les ions des éléments Li, Ba, Sr, B, Co, Cu, Mn, Mo, Ni, Ag, Pb, Zn, W, La, Ce ou Sn, la quantité totale des ions des éléments choisis parmi le groupe mentionné ci-dessus, rapportée à la dispersion totale, s'élevant à au moins 10 ppm.

8. Adhésif ou agent d'enduction de surface, contenant une dispersion polymère selon l'une quelconque des revendications 1 à 5 ou bien une dispersion polymère préparée conformément à la revendication 6 ou 7.

9. Utilisation d'une dispersion polymère selon l'une quelconque des revendications 1 à 5 ou bien d'une dispersion polymère préparée conformément à la revendication 7 ou 8, dans des adhésifs ou dans des agents d'enduction de surfaces.

10. Utilisation d'un mélange d'au moins deux sels différents solubles dans l'eau, choisis parmi le groupe des sels solubles dans l'eau des éléments Li, Ba, Sr, B, Co, Cu, Mn, Mo, Ni, Ag, Pb, Zn, W, La, Ce ou Sn, au moins deux des sels solubles dans l'eau contenant respectivement un ion différent choisi parmi le groupe constitué par les ions des éléments Li, Ba, Sr, B, Co, Cu, Mn, Mo, Ni, Ag, Pb, Zn, W, La, Ce ou Sn, pour le marquage d'adhésifs de dispersion.
